**Europäisches Patentamt**

**European Patent Office**

**Office européen des brevets**

(11) Veröffentlichungsnummer: **0 268 749 B1**

## EUROPÄISCHE PATENTSCHRIFT

(45) Veröffentlichungstag der Patentschrift: **13.05.92**

(51) Int. Cl.⁵: **B64D  11/06**

(21) Anmeldenummer: **87111737.0**

(22) Anmeldetag: **13.08.87**

(54) **Fahrzeugsitz.**

(30) Priorität: **13.10.86 DE 3634839**

(43) Veröffentlichungstag der Anmeldung:
**01.06.88 Patentblatt  88/22**

(45) Bekanntmachung des Hinweises auf die
Patenterteilung:
**13.05.92 Patentblatt  92/20**

(84) Benannte Vertragsstaaten:
**AT BE CH ES FR GB GR IT LI LU NL SE**

(56) Entgegenhaltungen:
**WO-A-87/01355
DE-A- 2 646 203
DE-A- 3 216 931
US-A- 3 762 764
US-A- 4 460 215**

(73) Patentinhaber: **Deutsche Airbus GmbH
Kreetslag 10
W-2103 Hamburg 93(DE)**

(72) Erfinder: **Baymak, Faruk, Dipl.-Ing.
Ostermeyerstrasse 18
W-2000 Hamburg 52(DE)**
Erfinder: **Stüben, Helmut, Dipl.-Ing.
Minneweg 20
W-2162 Grünendeich(DE)**

**Beschreibung**

Die Erfindung bezieht sich auf einen Flugbegleitersitz mit einer Lehne und einem klappbar angebrachten Sitz.

Bei Luftfahrzeugen, insbesondere Passagierflugzeugen, ist es notwendig Flugbegleitpersonal einzusetzen, das beim Starten und Landen auf sog. Flugbegleitersitzen Platz nimmt. Derartige auch mit Sicherheitsgurten versehene Sitze werden üblicherweise an Wänden und in Nischen der Passagierkabinen untergebracht und sind während des Reisefluges zusammengeklappt. Bei Großraumflugzeugen, bei denen wegen der Vielzahl der Passagiere auch eine größere Zahl von Flugbegleitern eingesetzt werden muß, ist es notwendig, eine entsprechend größere Anzahl von Flugbegleitersitzen vorzusehen, wobei auch ein größeres Angbot an Stauraum, beispielsweise für Notausrüstungen, wünschenswert wäre. Der dafür erforderliche Raum ist an Wänden und in Nischen jedoch nicht immer vorhanden. Außerdem ist die Anordnung von Flugbegleitersitzen an Gangwänden aus Sicherheitsgründen nicht zulässig. Die US-PS 3 762 764 zeigt einen Klappsitz für Transportfahrzeuge in einer gegenläufigen Doppelanordnung der mit einer Sitzseitenwange an der Fahrzeugwand befestigt ist und dessen der Seitenwange gegenüberliegendes Ende mit einer auf dem Fahrzeugboden lose aufsitzenden Stütze versehen ist. Hierbei ist der unterhalb des Sitzes befindliche Raum als Stauraum nutzbar. Maßnahmen zur Erschließung neuer Einbaumöglichkeiten von Flugbegleitersitzen sind diesem Dokument nicht entnehmbar.

Der Erfindung liegt daher die Aufgabe zugrunde einen Flugbegleitersitz der eingangs genannten Art so auszubilden, daß dieser ausschließlich am Fußboden der Flugzeugkabine befestigt wird und somit für Flugbegleitersitze neue Einbaumöglichkeiten erschließt und zugleich die Möglichkeit eröffnet, mehrere Stauräume mit optimaler Raumausnutzung anzuordnen.

Diese Aufgabe wird bei einem gattungsgemäßen Flugbegleitersitz durch ein ausschließlich am Fußboden der Flugzeugkabine befestigbares Gerüst, bestehend aus zwei Doppelholmen und dazwischen angeordneten Querträgern gelöst, wobei die Doppelholme mindestens teilweise mit der Lehne überlappt sind und sich zwischen den Doppelholmen ein Stauraum erstreckt.

Die erfindungsgemäße Maßnahme hat den Vorteil, daß Holme, Rückenlehnen und Kopfstützen für beide Sitze gemeinsam ausgenutzt werden, so daß sich der Platzbedarf erheblich verringert. Dabei ist es zweckmäßig, die Befestigungs-, Führungs- und Spannelemente für beide Sitzseiten auszubilden.

Weitere Ausgestaltungen der Erfindung sind in den Unteransprüchen angegeben. So bietet der Sitz nach den Ansprüchen 2 bis 4 zusätzlichen Stauraum für Notausrüstungen.

Die Erfindung wird anhand der beiliegenden Zeichnung näher erläutert. Es zeigen

Fig. 1 einen Flugbegleiterdoppelsitz,
Fig. 2 einen Flugbegleitersitz, verbunden mit einem Sitz von höherem Komfort,
Fig. 3 zeigt eine Vorderansicht des Sitzes nach Fig.2
Fig. 4 einen Doppelsitz mit vergrößertem Stauraum.

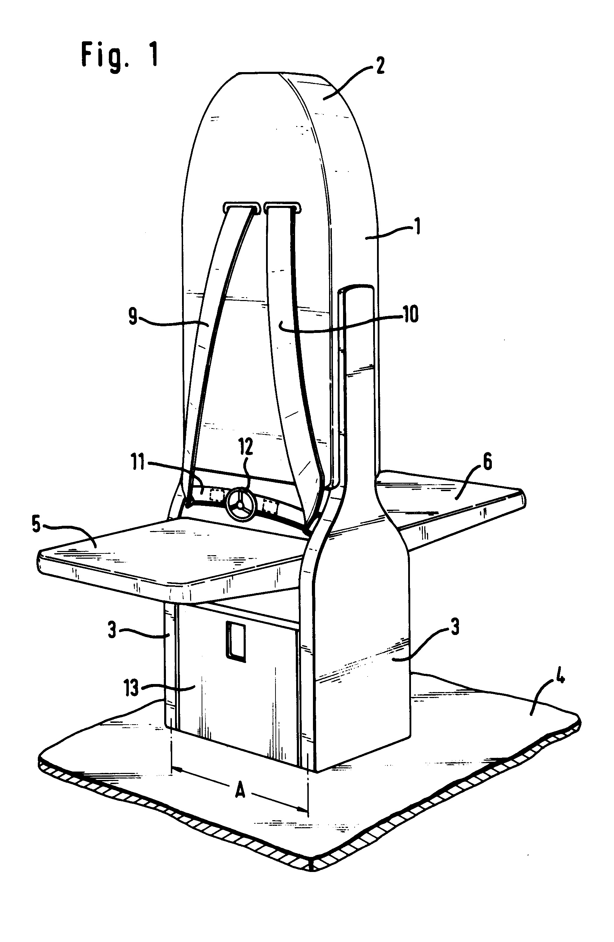

Figur 1 zeigt einen Flugbegleiterdoppelsitz mit einer beidseitigen Rückenlehne 1, deren oberes Ende gleichzeitig als doppelseitige Kopfstütze 2 ausgebildet ist. Die Lehne 1 ist zwischen zwei Doppelholmen 3 angeordnet, deren Abstand A auf den zur Befestigung des Doppelsitzes an dafür vorgesehenen Schienen oder anderen Befestigungsmitteln innerhalb des Fußbodens 4 bemessen ist. Zu beiden Seiten der Lehne 1 sind in entsprechender Höhe klappbare Sitzteile 5,6 angeordnet, die selbsttätig hochklappen können. In die Lehne 1 sind darüber hinaus für beide Sitzseiten jeweils zwei Schultergurte 9,10 und ein Beckengurt 11 integriert, welche mittels eines Gurtschlosses 12 geöffnet oder geschlossen werden können. Dabei werden beide Sitzteile 5,6 durch die Doppelholme 3 getragen, die, verbunden durch hier nicht sichtbare Querverbände, ein Gerüst bilden. Dabei sind die Doppelholme 3 mindestens teilweise mit der Lehne 1 überlappt, wobei sich zwischen den Doppelholmen ein Stauraum erstreckt. In dieser Ausgestaltung ist nur der unterhalb der Sitzteile 5,6 befindliche Bereich als Stauraum genutzt. Zum Verschließen des Stauraums ist auf jeder Seite des Sitzes eine Klappe 13 vorgesehen.

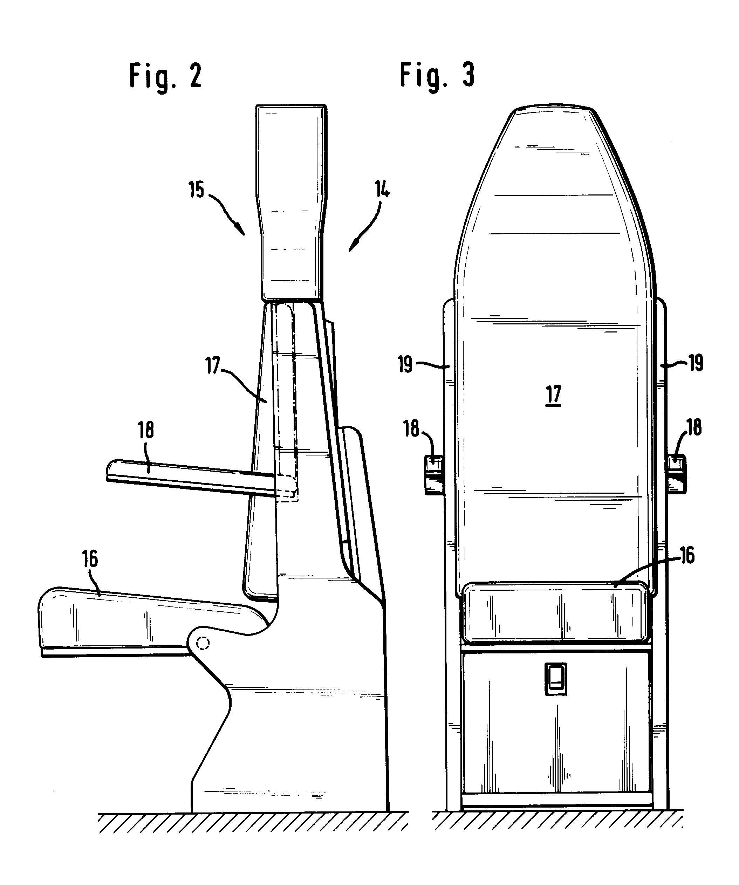

Die Figuren 2 und 3 zeigen einen Flugbegleitersitz 14 der vorbeschriebenen Art, der mit einem Flugbegleitersitz 15 von erhöhtem Komfort verbunden ist. Der Sitz 15 weist ein dickeres Sitzpolster 16, ein dickeres Rückenpolster 17 sowie zwei Armstützen 18 auf. Das tragende Gerüst dieses Sitzes wird wieder durch Doppelholme 19 gebildet, die durch nicht gezeigte Querträger miteinander verbunden sind. Dieser Sitz ist als Ruhesitz auf Langstreckenflügen von Vorteil. Es ist auch denkbar, daß derartige Sitze in Einzelanordnung als Passagiersitze verwendet werden, wenn sich z.B. hinter den Sitzen eine Kabinenwand befindet. Die gezeigten Sitze sind wieder Rücken an Rücken angeordnet, so daß sich wieder Vorteile hinsichtlich der Raumausnutzung ergeben.

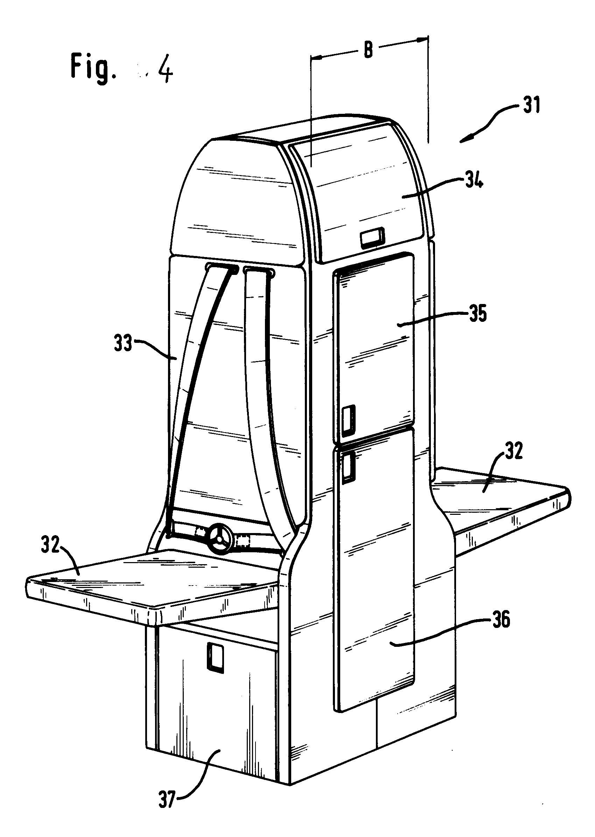

Figur 4 zeigt einen Doppelsitz 31 mit Sitzteilen 32, der einen vergrößerten Abstand B der Rückenlehnen 33 aufweist. Hierdurch ergibt sich ein größerer Stauraum, der in mehrere Fächer aufgeteilt ist, die über Klappen 34, 35, 36 und 37 zugänglich sind.

## Patentansprüche

1. Flugbegleitersitz in einer gegenläufigen Doppelanordnung mit einer Rückenlehne und einer klappbar angebrachten Sitzfläche je Teilsitz sowie je einem Sicherheitsgurtsystem, **gekennzeichnet,** durch ein ausschließlich am Fußboden der Flugzeugkabine befestigbares Gerüst, bestehend aus zwei Doppelholmen (3,19) und dazwischen angeordneten Querträgern, wobei die Doppelholme (3,19) mindestens teilweise mit der Lehne (1) überlappt sind und sich zwischen den Doppelholmen (3,19) ein Stauraum erstreckt.

2. Sitz nach Anspruch 1 , dadurch **gekennzeichnet,** daß sich der zwischen den Doppelholmen (3,19) befindliche Stauraum bis in den Kopfbereich eines Sitzbenutzers erstreckt und entsprechend seitlich angeordnete Stauraumklappen (34,35,36) vorgesehen sind.

3. Sitz nach Anspruch 1 oder 2, dadurch **gekennzeichnet,** daß der zwischen den Doppelholmen (3,19) unter den Sitzen (5,6) befindliche Raum als mit Klappen (13,20) verschließbarer Stauraum vorgesehen ist.

4. Sitz nach einem der Ansprüche 1 bis 3, dadurch **gekennzeichnet,** daß der zwischen den Doppelholmen (3, 19) und den Rückenlehnen mindestens ein mit Klappen (13,20,34,35,36) verschließbarer Stauraum vorgesehen ist.

## Claims

1. Aircrew seat in an oppositely facing double arrangement, having a backrest and a foldably mounted seat for each seat portion as well as one safety-belt system each, characterised by a frame, which is exclusively fixed to the floor of the aircraft cabin, comprising two double spars (3, 19) with cross supports arranged thereinbetween, in which respect the double spars (3, 19) overlap at least partially with the backrest (1), and a storage space extends between the double spars (3, 19).

2. Seat according to claim 1, characterised in that the storage space located between the double spars (3, 19) extends up to the head region of the person using the seat, and respective laterally arranged storage-space flaps (34, 35, 36) are provided.

3. Seat according to claim 1 or 2, characterised in that the space below the seats (5, 6) between the double spars (3, 19) is arranged to be a storage space which is provided with flaps (13, 20) and is lockable.

4. Seat according to one of claims 1 to 3, characterised in that at least one storage space, which is provided with flaps (13, 20, 34, 35, 36) and which is lockable, is arranged between the double spars (3, 19) and the backrests.

## Revendications

1. Siège d'accompagnateur de vol réliseé suivant un montage jumelé, opposé, avec un dossier et une assise basculante pour chaque siège ainsi qu'un système de ceinture de sécurité, siège caractérisé par une ossature uniquement fixée au plancher de 16 cabine de l'avion et qui se compose de deux double montants (3, 19) entre lesquels se trouvent des traverses et les double montants (3, 19) sont recouverts au moinS partiellement par le dossier (1) et on volume de stockage est prévu entre les double montants (3, 19).

2. Siège selon la revendication 1, caractérisé en ce que le volume de stockage qui se trouve entre les double montants (3, 19) s'étend jusqu'au niveau de la tête d'un utilicateur du siège et des volets de fermeture (34, 35, 36) du volume de stockage sont prévus sur le côté.

3. Siège selon la revendication 1 ou 2, caractérisé en ce que le volume qui se trouve entre les double montants (3, 19) fous les assises (5, 6) est un volume de stockage susceptible d'être fermé par des volets (13).

4. Siège selon l'une des revendications 1 à 3, caractérisé en ce qu'entre les double montants (3, 19) et les dossiers il y a au moins un volume de stockage susceptible d'être fermé par des volets (13, 34, 35, 36).

Fig. 1

# Fig. 2

# Fig. 3

Fig. 4